# EUROPÄISCHE PATENTSCHRIFT

(11) **EP 2 650 391 B1**
(45) Veröffentlichungstag und Bekanntmachung des Hinweises auf die Patenterteilung: **14.02.2018**
(21) Anmeldenummer: 13001753.6
(22) Anmeldetag: 05.04.2013
(51) Int. Cl.: C22B 1/245, B09B 3/00

(54) **Verfahren zur Inertisierung von Schwermetallen wie z.B. sechswertiges Chrom, Chloriden und anderen Salzbildnern sowie löslichen Feststoffen und metallischen Kontaminationen**
Method for the inertisation of heavy metals such as hexavalent chromium, chlorides and other salt-forming compounds and soluble solids and metallic contaminations
Procédé d'inertisation de métaux lourds tels que p. ex. le chrome hexavalent, de chlorures et d'autres halogènes ainsi que de solides solubles et de contaminations métalliques

(30) Priorität: 13.04.2012 AT 4452012
(43) Veröffentlichungstag der Anmeldung: 16.10.2013
(73) Patentinhaber: Andritz AG, 8045 Graz (AT)
(72) Erfinder: Fraissler, Gerald, A-8043 Graz (AT); Kaufmann, Kurt, A-8793 Gai (AT); Kaiser, Sebastian, A-1190 Wien (AT); Jaritz, Günter, A-8010 Graz (AT)
(74) Vertreter: Schweinzer, Friedrich

(56) Entgegenhaltungen:
- EP-A1- 0 566 376
- EP-A1- 0 976 843
- EP-A1- 1 918 031
- EP-A2- 1 167 556
- WO-A1-01/39902
- DE-A1- 3 815 632
- Adina Bosoaga ET AL: "CO2 capture using lime as sorbent in a carbonation/calcination cycle", , 1. Januar 2007 (2007-01-01), XP055072382, Gefunden im Internet: URL:http://www.netl.doe.gov/publications/p roceedings/07/carbon-seq/data/papers/p1_00 2a.pdf [gefunden am 2013-07-22]
- P. C. Okonkwo ET AL: "The Kinetics of Calcination of High Calcium Limestone", , 29. Februar 2012 (2012-02-29), XP055072395, Gefunden im Internet: URL:http://www.netl.doe.gov/publications/p roceedings/07/carbon-seq/data/papers/p1_00 2a.pdf [gefunden am 2013-07-23]

## Beschreibung

Die Erfindung betrifft ein thermisches Verfahren zur Inertisierung von Schwermetallen wie z.B. sechswertigem Chrom, Chloriden und anderen Salzbildnern sowie löslichen Feststoffen und metallischen Kontaminationen in Aschen und/oder Abfällen aus Verbrennungsprozessen oder anderen thermischen, chemischen, mechanischen Prozessen mittels Karbonatisierungsreaktionen zu säure- und wärmebeständigen Matrixkomponenten bei geringer Reaktivität.
Schlacken, Flugaschen, Stäube und Reaktionsprodukte aus der Verbrennung insbesondere von Ersatzbrennstoff (EBS) verfeuernden Wirbelschichtkesseln weisen hohe Schadstoffgehalte auf. Es können natürlich auch andere Abfallstoffe aus thermischen, chemischen, mechanischen Prozessen wie z.B. Schlämme, Schlacken, Krätzen, Stäube aus der Metallindustrie, der Gesteinshüttenindustrie, chemischen Industrie oder anderen Industriezweigen behandelt werden. Abhängig von den gesetzlichen Auflagen ist ihre derzeitige Entsorgung hinsichtlich Ober- und/oder Untertagedeponierung für Anlagenbetreiber oft sehr kostenintensiv.
Ein Hauptproblem bei der Deponierung stellen Schwermetalle, Chloride und andere Salzbildner sowie metallische Kontaminationen und andere Stoffe dar, die sich leicht lösen lassen. Diese können in den Deponieuntergrund gelangen und durch Vorhandensein von geeigneten Reaktionspartnern und -bedingungen weitere giftige Verbindungen und Kontaminationen begünstigen.
Aus der DE 693 01 367 T2 (EP 0 566 376 B1) ist ein Verfahren zum Sintern von Flugasche von verbranntem Hausmüll bekannt. Es wird hier Kohlenstoff in Form von reinem Kohlestaub zugegeben. Zum Sintern sind außerdem hohe Temperaturen von über 900°C erforderlich, was einen hohen Energieaufwand bedeutet.
Ähnlich diesem Verfahren wird in der WO 00/28094 ein thermisches Verfahren zur Behandlung schwermetallhaltiger Reststoffe (mit hohen Chlor-Anteilen, typischerweise größer 5 Masseprozent) beschrieben, in welchem durch Änderung der Ofenbedingungen von oxidierend auf reduzierend die Schwermetalle zuerst als Oxide durch Entsäuerung (Entschwefelung, Dekarbonatisierung) thermisch aktiviert werden, danach durch Zugabe von Reduktionsmittel wie z.B. Kohlenmonoxid, Wasserstoff, Erdgas, Erdöl, Kohle, etc. reduziert und infolge gasförmig abgeschieden werden. Die abgesaugten Schwermetalle werden in einer Nachbrennkammer wieder oxidiert und durch eine Filtereinrichtung vom angereicherten Abgas getrennt. Im feinkörnigen Endprodukt kann gewonnenes, metallisches Eisen z.B. durch Magnetscheidung oder Klassierung abgetrennt und einer weiteren Verwertung zugeführt werden. Im Überschuss zugesetztes Reduktionsmittel kann wiedergewonnen und für den Prozess wiederverwendet werden. Als Thermoreaktor wird ein Etagenofen verwendet, welcher im Gegenstrom betrieben wird. In den obersten Etagen finden unter oxidierenden Bedingungen bis ca. 800°C die Entwässerung und Kalzinierung zu Oxiden statt, in den untersten bis ca. 1.000°C reduzierend betriebenen Etagen die Abtrennung der flüchtigen Schwermetalle. Durch dauerndes Umwälzen in den einzelnen Etagen soll ein Zusammenbacken der Partikel bzw. eine Stückigmachung vermieden werden. Nachteil bei diesem Verfahren ist einerseits die aufwändige Prozessführung unter unterschiedlichen Ofenbedingungen (hohe Temperaturen, wechselnde Redoxbedingungen) und andererseits die kostenintensive Abgasreinigung hinsichtlich Abscheidung von Schwermetallen und thermisch gebildetem Chlorwasserstoff, welche an die Materialausführung und Prozesstechnik hohe Anforderungen stellt.
Die EP 1918031 A1 beschreibt ein thermisches Verfahren zur Entgiftung und Inertisierung von Aschen aus der Haus- und Industriemüll- oder Schlammverbrennung, wodurch insbesondere Schwermetalle unschädlich gemacht werden sollen. Zu diesem Zweck wird eine Mischung aus feinkörnigen Alumosilikaten wie z.B. Tone, Kaolin, etc., exotherm reagierendem Material sowie einer Chlorquelle hergestellt. Nach Zusetzen von Wasser sowie einer Granulierung folgt der Kalzinierungsschritt mit ca. 700°C. Ziel dieses Verfahrens ist, Schwermetalle durch die Bildung von thermisch flüchtigen Chloriden während der Kalzinierung abzuscheiden. Die Zugabe von feinkörnigen Alumosilikaten zur Mischung bewirkt durch hohe spezifische Oberflächen und thermische Aktivierung in Form von Schmelzphasen eine Versinterung der alumosilikatischen Phasen zu einer festen Matrix der erzeugten Pellets. Nachteil bei diesem Verfahren sind einerseits die durch die hohen erforderlichen Prozesstemperaturen verursachten Energiekosten sowie andererseits die aufwändige, kostenintensive Abgasführung (hinsichtlich Korrosionsschutz und Materialwahl) und Abgasreinigung zum Auswaschen der gebildeten Schwermetallchloride und des Chlorwasserstoffs im Prozess.
Weiters zeigt die WO 01/39902 A1 ein Verfahren zur Behandlung und Konditionierung von Abwasser in Glas. Hier wird schwermetallhaltiges Abwasser verdampft und die im Abgas befindlichen Schwermetalle in eine Glasmatrix eingelagert. Auch werden hier hohe Temperaturen zur Verdampfung der Schwermetalle eingesetzt, die spezielle Materialien des Verbrennungsofens bedürfen. In weiterer Folge findet ein Fällungsprozess statt.
Die EP 0 976 843 A1 beschreibt dabei die Behandlung von Stahlwerksabfallmetalloxiden, die in Form von Kohlebriquettes verfeuert werden. Es wird hier weder eine Inertisierung noch eine Kalzinierung nach dieser Verbrennung geoffenbart.
Die DE 38 15 635 A1 beschreibt ein Verfahren zum Schmelzen von Aschen aus Verbrennungsanlagen. Dazu muss jedoch die Asche über den Schmelzpunkt erhitzt werden, was einen hohen Energieeinsatz bedarf.
Ziel der Erfindung ist daher ein Verwertungsverfahren zur Inertisierung von Schwermetallen wie z.B. sechswertigem Chrom, Chloriden und anderen Salzbildnern sowie löslichen Feststoffen und metallischen Kontaminationen in Aschen und/oder Abfällen aus Verbrennungsprozessen oder anderen thermischen, chemischen oder mechanischen Prozessen zu schaffen. Dieses Verfahren soll auch unter wirtschaftlichem Aspekt (Investitions-, Betriebs-, Entsorgungskosten hinsichtlich Transport und Deponierung) vorteilhaft einsetzbar sein.

Die Erfindung ist daher dadurch gekennzeichnet, dass der Verbrennung oder dem thermischen, chemischen, mechanischen Prozess eine Kalzinierung nachgeschaltet ist. Die Kalzinierung erzielt nun abhängig vom Feuchtegehalt und Alkalität/Basizität des Abfalls eine Stabilisierung der Schwermetalle, eine Inertisierung u.a. von sechswertigem Chrom, Stabilisierung von Chloriden und anderen Salzbildnern sowie löslichen Feststoffen und metallischen Kontaminationen mittels Bildung von reaktionsträgen Karbonaten und Anpassung der Basizität. Bei hohem Feuchtegehalt des aufgegebenen Abfalls soll vorhandenes Wasser abgeschieden werden, um einen optimalen Stoffaustausch zu ermöglichen und eine Gewichtsreduktion zur Senkung der Entsorgungskosten (Transport, Deponierung) zu erreichen.
Eine günstige Ausgestaltung der Erfindung ist dadurch gekennzeichnet, dass für die Kalzinierung warmes Rauchgas/Abgas mit einem möglichst hohen Kohlendioxidanteil als Heizmedium verwendet wird, wobei die Gastemperatur hinsichtlich hoher Karbonatisierungsgeschwindigkeiten und Energiekosten optimiert wird und vorteilhaft zwischen 200 und 500 °C liegt.
Günstig ist es, wenn der Kalzinierung eine nasschemische Behandlung vorgeschaltet ist, um schädliche metallische Kontaminationen zu stabilisieren bzw. abzuscheiden.
In manchen Fällen hat es sich als vorteilhaft herausgestellt, wenn der Kalzinierung eine Stückigmachung, beispielsweise Granulierung, vorgeschaltet ist, wobei diese einer anfälligen nasschemischen Behandlung folgen oder auch direkt an die Verbrennung bzw. den thermischen/chemischen oder mechanischen Prozess anschließen kann. Bei vorgeschalteter Granulierung soll die Granulatform und Festigkeit auf den für den Kalzinierschritt vorgesehenen Thermoreaktor sowie die erforderliche Porosität und Permeabilität optimiert werden. Die mechanische Beanspruchung während des Kalzinierschritts soll auf die aufgegebenen Granulate so gering wie möglich gehalten werden, um Abrieb sowie Bruch und in Folge einen Staubanfall zu vermeiden, da dieser auf Lagerung, Förderung und Entsorgung negative Auswirkungen hat.

Die Erfindung wird nun anhand der Zeichnungen beispielhaft beschrieben, wobei
Fig. 1 ein Fliessbild des erfindungsgemäßen Verfahrens,
Fig. 2 ein mögliches Anlagenschema des erfindungsgemäßen Verfahrens bei einer Verbrennungsanlage,
Fig. 3 eine Variante von Verfahrensschritten gemäß dem erfindungsgemäßen Verfahren darstellt.

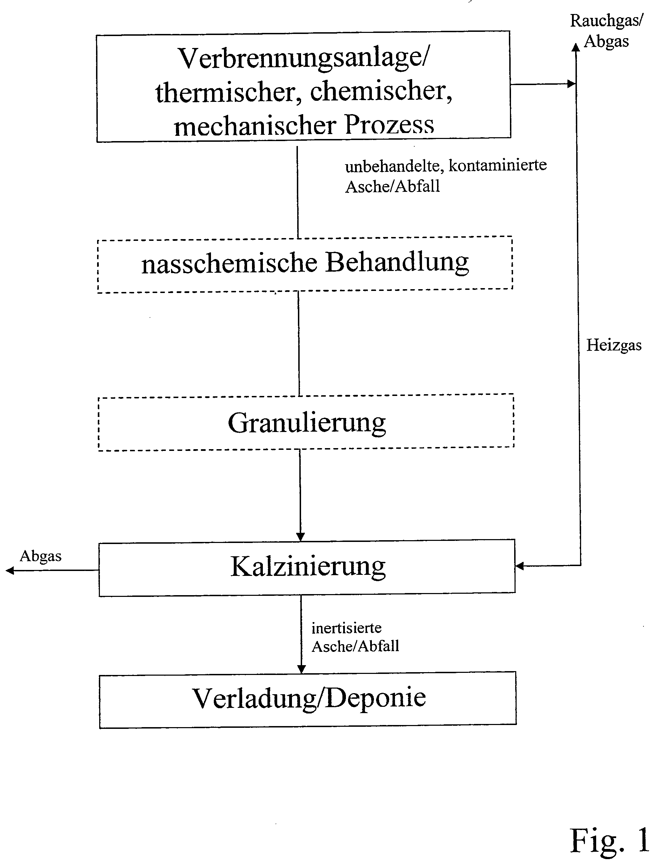

Fig. 1 zeigt schematisch das erfindungsgemäße Verfahren, wobei ausgehend von einer Verbrennungsanlage/thermischen, chemischen, mechanischen Prozess die dort anfallende Asche/Abfall, die mit Schwermetallen, Chloriden und anderen Salzbildnern sowie löslichen Feststoffen und metallischen Kontaminationen o.ä. belastet ist, einer Kalzinierung zugeführt wird.

Es können natürlich auch andere Abfallstoffe aus thermischen, chemischen, mechanischen Prozessen wie z.B. Schlämme, Schlacken, Krätzen, Stäube aus der Metallindustrie sowie der Gesteinshüttenindustrie, chemische Industrie oder anderen Industriezweigen behandelt werden. Wird zur Kalzinierung Rauchgas/Abgas mit hohem Kohlendioxidanteil verwendet, so kann die Löslichkeit von vorhandenen Metallkontaminationen, welche amphoteren Charakter aufweisen, durch Anpassung der Basizität durch Reaktion von der Basizität/Alkalität bestimmenden Metallhydroxyden/-oxiden oder anderen reaktionsfreudigen mineralischen Matrixkomponenten mit im Rauchgas enthaltenem Kohlendioxid zu Karbonaten gesenkt werden. Der Karbonisierungsgrad orientiert sich entsprechend am Optimum der geringsten Löslichkeiten hinsichtlich der Entsorgung, wobei im pH-Bereich von 8 bis 12 typischerweise die geringsten Löslichkeiten zu finden sind. Gleichzeitig erfolgt durch Karbonatisierung von Chloriden und anderen Salzbildnern sowie anderen löslichen Feststoffen eine Stabilisierung nach dem Ionenverdrängungsprinzip. Daneben wird überschüssiges Wasser abgeschieden, um eine Gewichtsreduktion und damit verbunden auch eine Reduktion der Entsorgungskosten zu erreichen, wobei dies auch bei einem allfälligen vorgeschalteten Verfahrensschritt zugesetztes Wasser sein kann.

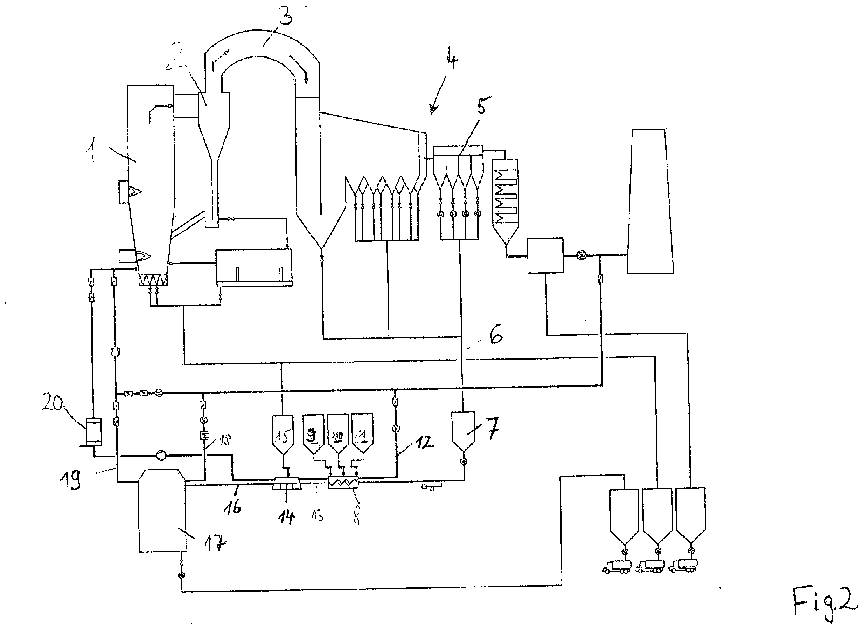

Fig. 2 zeigt ein vereinfachtes Anlagenschema zur Durchführung einer Variante des erfindungsgemäßen Verfahrens anhand einer Verbrennungsanlage.
Die Verbrennungsanlage ist hier als zirkulierender Wirbelschichtkessel 1 mit Zyklon 2, Nachbrennkammer 3 sowie Staubabscheidern 4 inklusive Multizyklon 5 dargestellt. Die unbehandelte Flugasche 6 wird über einen Pufferbehälter 7 in einen Mischer/Kneter 8 einer nasschemischen Behandlung zugeführt. Unter Zugabe von Wasser 9 und anderen alkalisch wirkenden Reaktionsmittel wie hier z.B. dargestellt Basen 10 und/oder Nitrat 11 erfolgt hier die nasschemische Behandlung. Durch die Hydratation/Oxidation des metallischen Aluminiums oder anderen unedlen metallischen Phasen werden abhängig von deren Gehalt in der Flugasche Brenngase freigesetzt. Entsprechend muss die Bildung einer explosionsgefährlichen Atmosphäre im Mischer/Kneter 8 und in seiner unmittelbaren Umgebung durch Gasspülung verhindert werden. Das im Abgas enthaltene Brenngas wird zur energetischen Nutzung in den Wirbelschichtkessel 1 rückgeführt. Ein vorgeschalteter Wäscher 20 dient der Abscheidung des Wertstoffes Ammoniak, welcher zur Entstickung im Verbrennungsprozess eingesetzt oder einer anderen Verwertung zugeführt werden kann.
Nach Beendigung der mechanischen Beanspruchung im Mischer/Kneter 8 und Austrag besteht die Gefahr, dass bei weiterer Handhabung die feuchte thixotrope Mischung durch Kristallisation und/oder Polymerisation/Kondensation aufgrund vorhandener Bindemittelphasen innerhalb kurzer Zeit unkontrolliert abbindet und eine feste Masse bildet. Ziel einer allfälligen nachfolgenden Stückigmachung/Granulierung ist daher eine in förder-, lager- und transporttechnischer Hinsicht optimale Formgebung und Formfestigkeit sowie die Erzielung einer optimalen Granulatform und Festigkeit für den nachgeschalteten Kalzinierschritt. Nach dem Mischer/Kneter 8 kann das Produkt 13 aus der nasschemischen Behandlung in einen Granulator 14 zur Mischung und Formgebung geführt werden.
In diesen Granulator 14 werden zur Stabilisierung der Granulate hinsichtlich Form und Festigkeit sowie für den Stoffaustausch erforderlichen Porosität und Permeabilität zusätzlich Bindemittel bzw. Bettasche 15 eingebracht. Feine Bettasche aus dem Verbrennungsprozess hat den Vorteil, dass ihre Problemstoffgehalte z.B. Chloride und andere Salzbildner, Schwermetalle, lösliche Feststoffe, vernachlässigbar gering sind.
Das Produkt 16 aus dem Granulationsschritt wird einem Thermoreaktor 17 zugeführt. Dies kann beispielsweise ein Etagenofen sein, wobei je Herd (Etage) die Prozessparameter Temperatur und Verweilzeit variiert werden können. Der Etagenofen bietet daneben eine gute Umwälzung sowie Durchströmung des Bettes und infolgedessen den gewünschten Kontakt mit der Ofenatmosphäre. Die mechanische Beanspruchung während des Kalzinierschritts soll auf das Produkt so gering wie möglich gehalten werden, um einen Staubanfall durch Abrieb sowie Bruch zu vermeiden, da dieser auf Lagerung, Förderung und Entsorgung negative Auswirkungen haben kann.
Die Beheizung des Thermoreaktors 17 erfolgt hier konvektiv mit Rauchgas 18 im Gegenstrom. Diese kann aber auch in Kombination mit anderen Trocknungsarten z.B. Strahlungstrocknung und Kontakttrocknung geschehen. Die Erfindung ist nicht auf den Einsatz eines Etagenofens beschränkt, vielmehr können auch äquivalente Thermoreaktoren mit entsprechenden Eigenschaften eingesetzt werden, wie z.B. Trommeltrockner, Bandtrockner o.ä. Die Rauchgaszusammensetzung ist wichtig für die Bereitstellung von Kohlendioxid zur Karbonatisierung und in weiterer Folge zur Senkung der Alkalität/Basizität. Die Bereitstellung von erforderlichem Kohlendioxid kann zusätzlich durch Zugabe geeigneter Additive zum Abfall/Asche, die sich während des Kalzinierschritts thermisch zersetzen, beispielsweise Harnstoff, Karbonate u.a., erfolgen.
Das Abgas 19 wird zur Wärmerückgewinnung in den Wirbelschichtkessel 1 zurückgeführt, welches zu energetischem Nutzen führt.

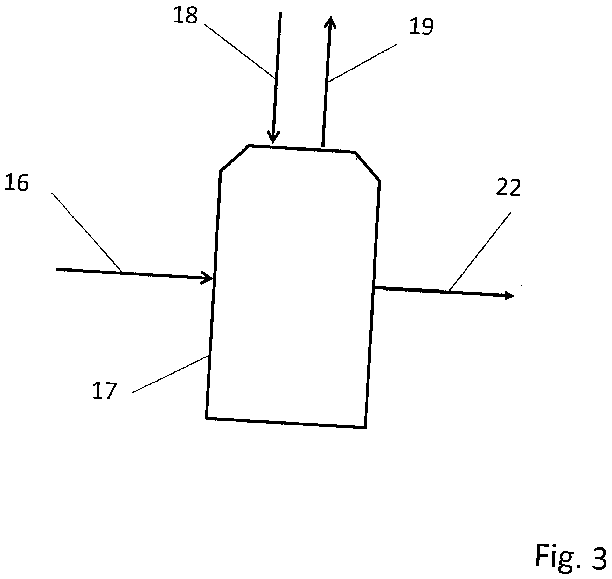

Fig. 3 zeigt die Verfahrensstufe Kalzinierung, die der Verbrennung bzw. einem thermischen, chemischen, mechanischen Prozess nachgeschaltet wird.
Das erfindungsgemäße Verwertungsverfahren ist dem Verbrennungsprozess/thermischen, chemischen, mechanischen Prozess nachgeschaltet und kann als verbundene oder unabhängige Anlage betrieben werden. Diese kann der Verbrennung bzw. dem thermischen Prozess ohne Zwischenschritt nachgeschaltet werden, falls die Asche keine unedlen metallischen Phasen aufweist. Andernfalls sollte eine nasschemische Behandlung eventuell in Kombination mit einer Granulierung vorgeschaltet werden.

Der eingesetzte Thermoreaktor 17 ist gasdicht ausgeführt und mittels eines Saugzugs wird ein Unterdruck hergestellt. Die Betriebsweise erfolgt vorzugsweise nach dem kontinuierlichen oder quasi-kontinuierlichen Prinzip und ermöglicht zur gezielten Beeinflussung der Produktbeschaffenheit hinsichtlich Deponierung variable Verweilzeiten. Durch die Ausführung des Thermoreaktors 17 sollen der zu behandelnde Abfall/Asche 16 vom Rauchgas/Abgas 18 gut durchströmt werden, um den gewünschten Kontakt mit dem Rauchgas/Abgas zu ermöglichen. Werden Granulate in den Thermoreaktor 17 aufgegeben, sollen durch das gewählte Aggregat Abrieb und Bruch derselben und in Folge ein Staubanfall vermieden werden, da dieser auf Lagerung, Förderung und Entsorgung negative Auswirkungen hat. Hier ist ein möglichst formerhaltendes Verfahren zu wählen. Aus dem Verbrennungsprozess/thermischen Prozess abgezweigtes Rauchgas/Abgas 18 mit einem hohen Kohlendioxidanteil ist für seine Wiederverwendung als Heizmedium besonders zweckmäßig. Bei verbundenen als auch unabhängigen Anlagen können zur Rauchgaserzeugung auch Brenner oder Verbrennungsreaktoren eingesetzt werden. Die Gastemperatur am Eintritt des Thermoreaktors beträgt vorteilhaft mehr als 200°C. Das Abgas 19 am Austritt kann als Rezirkulationsgas dem Verbrennungsprozess wieder zugeführt werden.

Die Erfindung ist nicht durch die Zeichnungen und Beschreibung beschränkt. So kann eine Reihe von unterschiedlichen Thermoreaktoren, wie u.a. Etagenöfen, aber auch beispielsweise Trommeltrockner, Bandtrockner o.ä. eingesetzt werden.

## Patentansprüche

1. Verfahren zur Inertisierung von Schwermetallen, wie z.B. sechswertigen Chrom, Chloriden und anderen Salzbildnern sowie löslichen Feststoffen und metallischen Kontaminationen in Aschen und/oder Abfällen aus Verbrennungsprozessen oder anderen thermischen, chemischen, mechanischen Prozessen mittels Karbonatisierungsreaktionen zu säure- und wärmebeständigen Matrixkomponenten bei geringer Reaktivität, **dadurch gekennzeichnet, dass** der Verbrennung oder thermischen, chemischen, mechanischen Prozess eine Kalzinierung und gleichzeitig die Karbonatisierung mineralischer Matrixkomponenten nachgeschaltet ist.

2. Verfahren nach Anspruch 1, **dadurch gekennzeichnet, dass** für die Kalzinierung Rauchgas als Heizmedium verwendet wird, wobei die Gastemperatur hinsichtlich der Karbonatisierungsgeschwindigkeiten und Energiekosten eingestellt werden soll und vorzugsweise zwischen 200 und 500°C liegt.

3. Verfahren nach Anspruch 1 oder 2, **dadurch gekennzeichnet, dass** Kohlendioxid durch Zugabe von Additiven zum Abfall/Asche, die sich während des Kalzinierschritts thermisch zersetzen, beispielsweise Harnstoff oder Karbonate, zur Erhöhung seiner Verfügbarkeit für die Karbonatisierung freigesetzt wird.

4. Verfahren nach einem der Ansprüche 1 bis 3, **dadurch gekennzeichnet, dass** der Karbonisierungsgrad im Produkt aus der Kalzinierung so gewählt wird, dass die Alkalität/Basizität vorzugsweise im pH-Bereich 8 bis 12 liegt und sich die geringsten Löslichkeiten der Kontaminationen durch Schwermetalle, wie z.B. sechswertiges Chrom, Chloride und andere Salzbildner sowie lösliche Feststoffe und andere metallische Kontaminationen einstellen.

5. Verfahren nach einem der Ansprüche 1 bis 4, **dadurch gekennzeichnet, dass** der Kalzinierung eine nasschemische Behandlung vorgeschaltet ist.

6. Verfahren nach einem der Ansprüche 1 bis 5, **dadurch gekennzeichnet, dass** der Kalzinierung eine Stückigmachung, beispielsweise Granulierung, vorgeschaltet ist.

## Claims

1. Method for inertisation of heavy metals with low reactivity, such as hexavalent chromium, chlorides and other salt-forming compounds as well as soluble solids and metallic contaminants in ash and/or waste from combustion processes or other thermal, chemical, mechanical processes, by means of carbonatation reactions to form matrix components that are resistant to acid and heat, **characterised in that** the combustion or thermal, chemical, mechanical process is followed by calcination and the carbonatation of mineral matrix components at the same time.

2. Method according to claim 1, **characterised in that** flue gas is used as the heating medium for calcination, where the gas temperature should be set in consideration of the carbonation speeds and energy costs and is preferably between 200 and 500°C.

3. Method according to claim 1 or 2, **characterised in that** carbon dioxide is released to increase its availability for carbonatation by mixing additives into the waste/ash that decompose thermally during the calcination stage, for example urea or carbonates.

4. Method according to one of claims 1 to 3, **characterised in that** the degree of carbonatation in the product from calcination is selected such that the alkalinity/basicity is preferably in a pH range of 8 to 12 and the lowest solubilities of the contaminants are obtained by means of heavy metals, such as hexavalent chromium, chlorides and other salt-forming compounds as well as soluble solids and other metallic contaminants.

5. Method according to one of Claims 1 to 4, **characterized in that** the calcination process is preceded by wet-chemical treatment.

6. Method according to one of Claims 1 to 5, **characterized in that** calcination is preceded by a fragmenting process, for example granulation.

## Revendications

1. Procédé d'inertage de métaux lourds, comme par exemple de chrome hexavalent, de chlorures et autres formateurs de sel comme des solides solubles et des combinaisons métalliques dans des cendres et/ou des déchets provenant de processus de combustion ou d'autres processus mécaniques, chimiques, thermiques au moyen de réactions de carbonatisation en composants de matrice résistants aux acides et à la chaleur lorsque la réactivité est faible, **caractérisé en ce qu'**une calcination est en aval de la combustion ou du processus mécanique, chimique ou thermique et simultanément une carbonatisation de composants de matrice minéraux.

2. Procédé selon la revendication 1, **caractérisé en ce que** pour la calcination est utilisée du gaz de fumée en tant que moyen de chauffage, la température du gaz devrait être réglée par rapport aux vitesses de carbonatisation et aux coûts d'énergie et de préférence entre 200 et 500°C.

3. Procédé selon la revendication 1 ou la revendication 2, **caractérisé en ce que** du dioxyde de carbone par addition d'additifs au déchet/cendre, qui se décomposent thermiquement pendant l'étape de calcination, par exemple de l'urée, du carbonate, est libéré pour augmenter sa disponibilité pour la carbonisation.

4. Procédé selon l'une quelconque des revendications 1 à 3, **caractérisé en ce que** le degré de carbonisation dans le produit à partir de la calcination est sélectionné de telle sorte que l'alcalité/basicité se trouve de préférence dans la region de pH entre 8 et 12, et les solubilités les plus faibles des contaminations se règlent par des métaux lourds, comme par exemple le chrome hexavalent, les chlorures et autres formateurs de sel comme des solides solubles et autres contaminations métalliques.

5. Procédé selon l'au moins quelconque des revendications 1 à 4, **caractérisé en ce qu'**un traitement chimique par voie humide est en amont de la calcination.

6. Procédé selon l'une quelconque des revendications 1 à 5, **caractérisé en ce qu'**une agglomération, par exemple la granulation, est en amont de la calcination.
